# EUROPÄISCHE PATENTSCHRIFT

(11) **EP 4 596 265 B1**
(45) Veröffentlichungstag und Bekanntmachung des Hinweises auf die Patenterteilung: **19.11.2025**
(21) Anmeldenummer: 24154798.3
(22) Anmeldetag: 30.01.2024
(51) Int. Cl.: B60G 7/00, B60G 7/02

(54) **QUERLENKER MIT ANGESCHWEISSTER LAGERHÜLSE**
TRANSVERSE LINK WITH WELDED BEARING SLEEVE
BRAS OSCILLANT TRANSVERSAL AVEC DOUILLE DE PALIER SOUDÉE

(43) Veröffentlichungstag der Anmeldung: 06.08.2025
(73) Patentinhaber: Benteler Automobiltechnik GmbH, 33102 Paderborn (DE)
(72) Erfinder: Abram, Thomas, 33106 Paderborn (DE); Scherlitz, Frank, 59277 Ahlen (DE)
(74) Vertreter: Osterhoff, Utz

(56) Entgegenhaltungen:
- CN-A- 109 733 139
- CN-U- 206 416 792
- CN-U- 207 433 168

## Beschreibung

Die vorliegende Erfindung betrifft einen Querlenker gemäß den Merkmalen im Oberbegriff von Anspruch 1.

Im Kraftfahrzeugbau dienen Querlenker für die Führung und Lenkung der Räder. Der Querlenker stellt auf der einen Seite die Verbindung mit der Lageranordnung des Rades und auf der anderen Seite die Verbindung mit dem Chassis des Fahrzeugs her.

Die Lageranordnung umfasst neben dem Radlager und der Antriebswelle unter anderem auch ein Schwenklager, eine Verbindung mit dem Achsschenkel und mit einem Führungsgelenk, mit der Spurstange sowie weiterer Elemente für die Lenkung, den Antrieb, die Federung und die Bremse des Fahrzeugs.

Im Betrieb des Fahrzeugs ist der Querlenker vielseitigen Beanspruchungen ausgesetzt. Der hohen Beanspruchung des Querlenkers kann mit einer besonders festen und stabilen Konstruktion begegnet werden. Eine solche Konstruktion bringt jedoch oft auch ein hohes Gewicht mit sich, was zu erhöhtem Energieverbrauch führt. Eine gewichtsoptimierte Gestaltung ist durch Werkstoffe besonders hoher Festigkeit oder die Kombination unterschiedlicher Werkstoffe möglich. Insbesondere die hochbelasteten Lageranbindungsbereiche können aus Gussteilen oder Fräsbauteilen bestehen, die mit einem Grundkörper aus Stahlblech verbunden werden. Diese Bauweise hat allerdings den Nachteil, dass die einzelnen Bauteile miteinander gefügt werden müssen, was sich nachteilig auf die Produktionskosten auswirkt.

Beispielsweise sind aus der DE 10 2010 007 944 A1 sowie der DE 10 2016 123 256 A1 entsprechende Querlenker bekannt.

Weiterhin sind aus der CN 206 416 792 U, der CN 207 433 168 U sowie der CN 109 733 139 A Querlenker bekannt. Das Dokument CN 206 416 792 U offenbart einen Querlenker entsprechend dem Oberbegriff des Anspruchs 1.

Insbesondere die Dauerhaltbarkeit eines Querlenkers, und somit die Sicherheit des Fahrzeugs, ist ein weiterer wesentlicher Punkt, der bei der Konstruktion und Auslegung eines Querlenkers zu berücksichtigen ist. Verbindungsbereiche zwischen verschiedenen Komponenten eines Querlenkers müssen besonders sorgfältig gestaltet werden.

Aufgabe der vorliegenden Erfindung ist es, einen Querlenker zur Verfügung zu stellen, der ein geringes Gewicht und eine besonders einfache Produzierbarkeit bei gleichzeitig hoher Dauerhaltbarkeit und ein verbessertes Crashverhalten aufweist. Die zuvor genannte Aufgabe wird mit einem Querlenker gemäß dem Merkmal im Anspruch 1 gelöst. Vorteilhafte Ausgestaltungsvarianten sind Gegenstand der abhängigen Ansprüche.

Der erfindungsgemäße Querlenker dient zur Anordnung an einer Achse eines Kraftfahrzeuges. Der Querlenker selbst weist einen Grundkörperbereich auf, der als einstückiges Blechbauteil aus einer Blechplatine hergestellt ist. Der Grundkörperbereich weist bevorzugt drei daran ausgebildete Lagerbereiche auf. Der Grundkörperbereich ist insbesondere in Draufsicht L-förmig ausgebildet. Der Grundkörperbereich ist schalenartig ausgebildet, mithin ein flacher Grundkörperbereich mit davon abgebogenen Schenkeln. Der Grundkörperbereich weist insbesondere zwei Arme auf. Der Grundkörperbereich weist weiterhin besonders bevorzugt zwei fahrzeugseitige Anbindungsstellen sowie eine radseitige Anbindungsstelle auf. Die Anbindungsstellen können auch Lagerbereiche genannt werden.

Ein Lagerbereich weist eine einstückige werkstoffeinheitliche Lageraufnahme auf. Die Lageraufnahme weist dazu eine Aufnahmeöffnung auf. Die Aufnahmeöffnung liegt in einer Öffnungsebene. Die Öffnungsebene liegt im Wesentlichen senkrecht zur Grundkörperebene. Im Wesentlichen senkrecht bedeutet dabei bevorzugt in einem Winkel zwischen 80° und 100°, insbesondere zwischen 85° und 95° und ganz besonders bevorzugt ca. senkrecht zur Grundkörperebene.

Die Aufnahmeöffnung ist insbesondere umfassend rund, ganz besonders bevorzugt kreisrund ausgebildet. Die Lageraufnahme ist einstückig aus einer Blechplatine hergestellt worden und gegenüber der Grundkörperebene somit durch Abbiegen bzw. Umbiegen hergestellt. Es ist eine Lagerhülse in die Aufnahmeöffnung eingesteckt und formschlüssig in dieser aufgenommen. Zumindest abschnittsweise ist die Lagerhülse mit der Aufnahmeöffnung verschweißt. Die Lagerhülse ist vollumfänglich von der Aufnahmeöffnung umgriffen bzw. umrandet. Die Aufnahmeöffnung ist somit ein Loch, welches formschlüssig die Lagerhülse umgreift. Die Langlebigkeit des Querlenkers bei Dauerwechselbeanspruchung ist dadurch gesteigert. Außerdem wird die Lagerhülse im Falle eines Schweißnahtversagens durch die Aufnahmeöffnung am Lenker gehalten.

Erfindungsgemäß zeichnet sich der Querlenker nunmehr dadurch aus, dass weiterhin ein Führungsblech in dem Lagerbereich einstückig und werkstoffeinheitlich mit dem Grundkörperbereich bzw. in der Grundkörperebene ausgebildet ist. Das Führungsblech weist einen Aufnahmeabschnitt auf.

Der Aufnahmeabschnitt ist eine an die Außenkontur der Hülse abschnittsweise angepasste Kontur. Die angepasste Kontur ist dabei ein Kreisabschnitt, der die Außenmantelfläche der Lagerhülse abschnittsweise und weniger als 180 Grad umgreift.

Das Führungsblech und die Öffnungsebene der Aufnahmeöffnung werden bauartbedingt im Wesentlichen parallel zueinander angeordnet. Somit ist das Führungsblech ebenfalls im Wesentlichen senkrecht zur Grundkörperebene ausgebildet. Es hat sich hier jedoch als erfindungsgemäß vorteilig erwiesen, wenn die Öffnungsebene der Aufnahmeöffnung und das Führungsblech nicht parallel zueinander angeordnet sind, sondern in einem Winkel von mehr als 1 Grad, insbesondere mehr als 2 Grad relativ zueinander angeordnet sind. Der Winkel zwischen Führungsblech und Öffnungsebene der Aufnahmeöffnung sollte jedoch insbesondere weniger als 15 Grad, besonders bevorzugt weniger als 10 Grad betragen. Dies bietet erfindungsgemäß den Vorteil, dass die Öffnungsebene der Aufnahmeöffnung und/oder das Führungsblech weniger als 90 Grad gegenüber der Grundkörperebene abgebogen werden müssen. Hierdurch werden bereits weniger Biegeeigenspannungen eingebracht. Ferner ist im späteren Einsatz im Kraftfahrzeug der Spannungsverlauf hierdurch optimiert, was sich auf die Dauerhaltbarkeit auswirkt.

Die Kontur des Führungsbleches liegt formschlüssig an der Hülse an. Das Führungsblech ist ebenfalls bevorzugt zumindest abschnittsweise durch Punktschweißen oder abschnittsweise radial umlaufend mit der Lagerhülse verschweißt.

Hierdurch ist folgender erfindungsgemäßer Vorteil ausgebildet. Zum einen kann die Lagerhülse fertigungstechnisch besonders einfach und hoch präzise an den Querlenker angesetzt werden, dadurch, dass die Lagerhülse durch die Aufnahmeöffnung und die Kontur des Führungsbleches bereits positioniert ist und somit nur noch verschweißt werden muss. Dadurch, dass nicht zwei Aufnahmeöffnungen, wie es im Stand der Technik bekannt ist, einstückig und durch Umbiegen an dem Grundkörperbereich ausgebildet sind, entsteht ein geringerer Produktionsaufwand, insbesondere ein geringerer Biegeaufwand. Dadurch erzeugte Eigenspannungen in dem Grundkörperbereich sind vermindert, weshalb im Crashfall bzw. auch bei Dauerschwingbelastung bzw. Biegewechselbeanspruchungen die Haltbarkeit des erfindungsgemäßen Querlenkers gegenüber dem Stand der Technik verbessert ist.

Weiterhin umgreift die Kontur des Führungsbleches die Hülse in einem Winkel zwischen 90° und 180°, bevorzugt in einem Winkel von 120° bis 160°. Hierdurch wird eine formschlüssige Abstützung der Hülse im Crashfall bzw. bei Versagen der Schweißnähte gewährleistet. Insbesondere befindet sich diese Anbindung fahrzeugseitig, so dass eine Stützkraft von der Lagerhülse in Richtung der Kontur erfolgt. Das formschlüssige Umgreifen der Hülse dient somit der weiteren Stabilisierung, so dass die Verbindung nicht nur durch die Schweißnaht selbst gegeben ist.

Ein weiterer Vorteil ergibt sich wie folgt: im Bereich des Führungsbleches sind Biegespannungen durch den Umformprozess eingebracht, was nachteilig ist. Durch das Verschweißen des Führungsbleches mit der Lagerhülse entsteht ein Wärmeeinfluss, weshalb sich Biegespannungen in diesem Bereich vereinheitlichen, bzw. durch den Umformprozess eingebrachte Spannungen homogenisieren. Der Spannungsverlauf, insbesondere bei Biegewechselbeanspruchung ist somit verbessert, was die Langlebigkeit des erfindungsgemäßen Querlenker wiederum verbessert.

Bevorzugt ist die Lagerhülse mit der Aufnahmeöffnung auf einer dem Führungsblech abgewandten Seite verschweißt.

Weiterhin bevorzugt ist die Lagerhülse mit Führungsblech auf einer der Aufnahmeöffnung abgewandten Seite verschweißt. Dies vereinfacht den Produktionsprozess.

Der Grundkörperbereich des Querlenkers kann durch eine Kaltumformung aus einer Stahlblechplatine hergestellt sein. Eingebrachte Biegespannungen können durch den Wärmeeintrag des Schweißens homogenisiert werden. Insbesondere kann der Querlenker aus einer Blechplatine hergestellt sein, die eine Dicke von einschließlich 1,5 mm bis 5 mm, bevorzugt von 2 mm bis 4 mm und besonders bevorzugt größer 3 mm bis 4 mm aufweist.

In einer alternativen Variante kann der Grundkörper bzw. Grundkörperbereich aus einer Stahlblechplatine mit Warmumform-Presshärten hergestellt sein. Es sind somit Zugfestigkeiten größer 750 MPa möglich, bei gleichzeitig hinreichender Duktilität.

Auch ist es möglich, dass der Grundkörperbereich ein zusätzliches Schließblech aufweist. Das Schließblech kann mit zur Versteifung des Lenkers beitragen, in dem es weitere Versteifungsgeometrien, wie zum Beispiel Sicken oder Rippen, im Grundkörperbereich aufweist. Außerdem kann das Schließblech auch nur lokal in zu versteifenden Bereichen angebracht werden. Ebenso kann das Schließblech Öffnungen/Durchgänge aufweisen, wie auch einen umgebogenen Flansch. Damit wäre der Querlenker zweischalig ausgebildet. Erfindungsgemäß ist jedoch insbesondere der Anbindungsbereich der Lagerhülse in sich an nur einer Schale des Querlenkers ausgebildet, so dass das Führungsblech und die Aufnahmeöffnung einschalig, insbesondere einstückig und werkstoffeinheitlich an einer Schale des Querlenkers angeordnet sind.

Es sind weitere Lagerbereiche vorhanden. Dies können beispielsweise eine Aufnahmeöffnung zur Aufnahme eines Kugelzapfens sein bzw. Anschrauböffnungen um ein Kugelgelenk oder andere Lageranbindungen anzunehmen. Erfindungsgemäß ist zumindest ein Lagerbereich mit der zuvor beschriebenen Variante der Lagerhülse ausgebildet. Andere Lageraufnahmen oder Befestigungen sind denkbar.

**In** dem Grundkörperbereich selber aber auch in dem Übergangsbereich von Grundkörperbereich zu dem erfindungsgemäßen Lagerbereich bzw. zu der Aufnahmeöffnung und/oder dem Führungsblech können Versteifungsgeometrien, beispielsweise in Form von Versteifungssicken, eingebracht sein.

Weitere Vorteile, Merkmale, Eigenschaften und Aspekte der vorliegenden Erfindung sind Gegenstand der nachfolgenden Beschreibung. Bevorzugte Ausgestaltungsvarianten sind in schematischen Figuren dargestellt. Diese dienen dem einfachen Verständnis der Erfindung. Es zeigen
- Figur 1: eine perspektivische Ansicht eines erfindungsgemäßen Querlenkers mit eingesetzter Lagerhülse;
- Figur 2: eine perspektivische Ansicht des Querlenkers, insbesondere des erfindungsgemäßen Lagerbereichs ohne Lagerhülse und
- Figur 3: in einer Stirnansicht schematisiert das Führungsblech sowie die Öffnungsebene.

In den Figuren werden für gleiche oder ähnliche Bauteile dieselben Bezugszeichen verwendet, auch wenn eine wiederholte Beschreibung aus Vereinfachungsgründen entfällt.

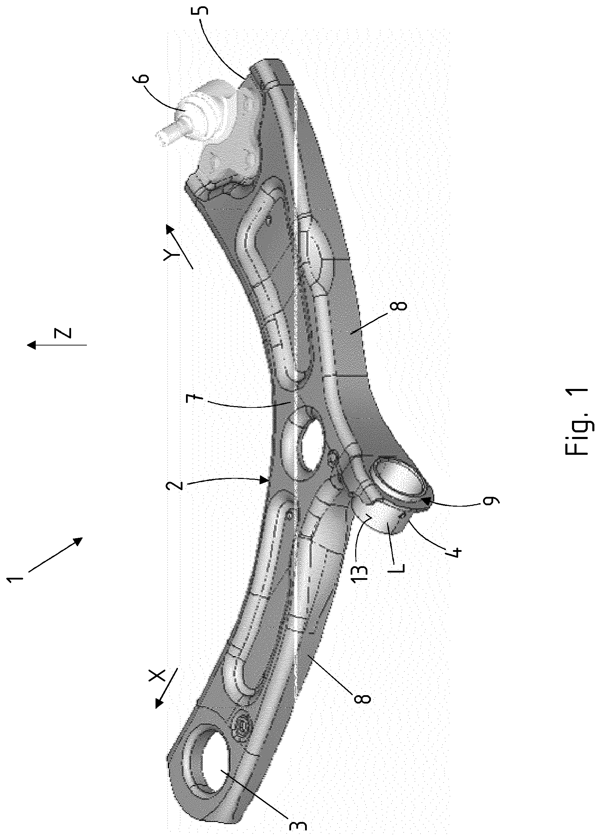

Figur 1 zeigt einen erfindungsgemäßen Querlenker 1 in perspektivischer Ansicht. Der Querlenker 1 weist einen Grundkörperbereich 2 auf, der sich im Wesentlichen L-förmig erstreckt. In Kraftfahrzeug X-Ebene sind zwei fahrzeugseitige Lagerbereiche 3, 4 angeordnet und in Kraftfahrzeugquerrichtung Y ein radseitiger Lagerbereich 5. Der radseitige Lagerbereich 5 ist mit einem angeschraubten Kugelgelenk 6 dargestellt. Der Grundkörperbereich 2 weist eine Grundkörperebene 7 auf. Die Grundkörperebene 7 ist im hier dargestellten Zustand wesentlich im Bereich der X-Y-Ebene ausgebildet. Von diesem sind beispielsweise Kanten bzw. Flansche 8 abgebogen bezogen auf die Kraftfahrzeugvertikalrichtung Z. Der erfindungsgemäße Lagerbereich 4 zeichnet sich nunmehr durch eine eingesetzte Lagerhülse L aus. Hierzu ist eine Aufnahmeöffnung 9 vorhanden. Die Aufnahmeöffnung 9 ist einstückig und werkstoffeinheitlich hergestellt aus dem Grundkörperbereich 2 selbst und ist im Wesentlichen mit einer Öffnungsebene 10 dargestellt, hier orientiert in der Z-Y-Ebene. Die Aufnahmeöffnung 9 ist bevorzugt aus einer Blechplatine einstückig und werkstoffeinheitlich an der Grundkörperebene nur durch Umbiegen hergestellt bzw. vorheriges Lochen.

Die Öffnungsebene 10, in der die Aufnahmeöffnung 9 liegt, ist somit im Wesentlichen rechtwinklig zur X-Y-Ebene bzw. zur Grundkörperebene 7 angeordnet.

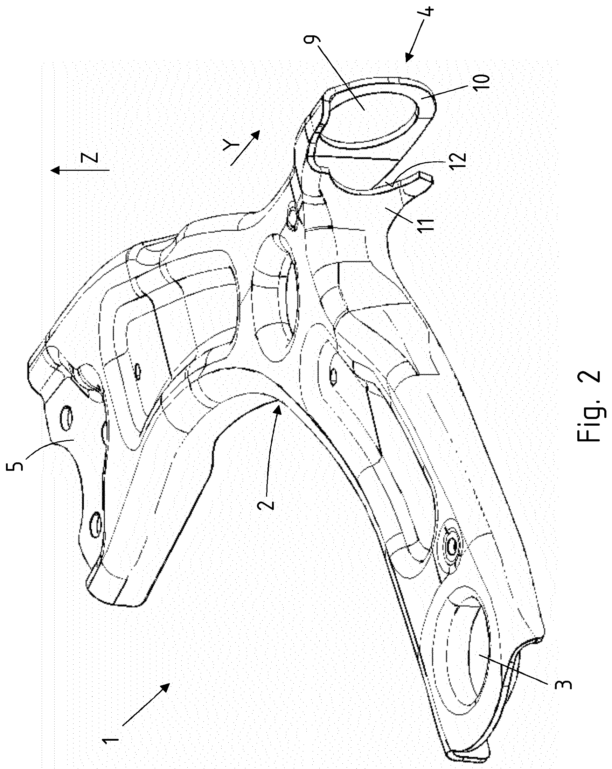

Der erfindungsgemäße Vorteil ist nunmehr in Figur 2 dargestellt. Es ist zur Aufnahmeöffnung 9, die in einer Öffnungsebene 10 liegt, beabstandet ein Führungsblech 11 angeordnet. Dieses Führungsblech 11 weist eine Kontur 12 auf, die der Außenkontur 13 aus Figur 1 der Lagerhülse L angepasst ist. Die Kontur 12 entspricht zumindest abschnittsweise umlaufend der Aufnahmeöffnung 9. Die in Figur 1 dargestellte Lagerhülse L liegt an der Kontur 12 in Figur 2 formschlüssig an. Eine in Kraftfahrzeugquerrichtung Y wirkende Kraft wird somit zwischen Lagerhülse L und Kontur 12 abgestützt. Nicht näher dargestellte Schweißnähte sichern die Lagerhülse L sowohl in der Aufnahmeöffnung 9 als auch an dem Führungsblech 11.

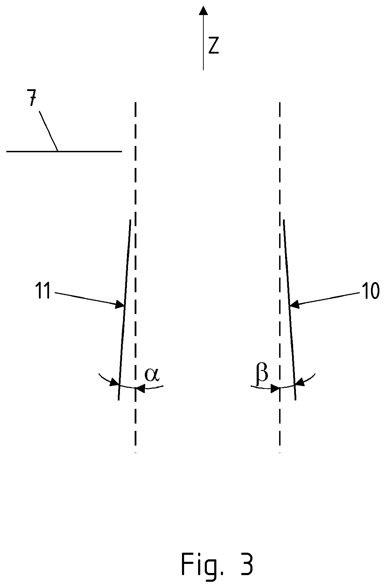

Figur 3 zeigt in einer Stirnansicht schematisiert das Führungsblech 11 sowie die Öffnungsebene 10. Sowohl das Führungsblech 11 als auch die Öffnungsebene 10 sind gegenüber der Grundkörperebene 7 abgebogen. Gegenüber einer Vertikalen in Kraftfahrzeug-Z-Richtung ist jedoch das Führungsblech 11 mit einem Winkel α und die Öffnungsebene 10 mit einem Winkel β nicht vollständig senkrecht zur Grundkörperebene 7 abgewinkelt. Die Umformbiegeoperation kann somit geringer ausgeführt werden, weshalb weniger Biegespannung eingebracht wird. Insbesondere sind der Winkel α und der Winkel β zusammen addiert in einem Bereich von bevorzugt größer 1 Grad, insbesondere größer als 2 Grad ausgebildet, jedoch geringer als 15 Grad, insbesondere weniger als 10 Grad ausgebildet. Erfindungsgemäß kann auch beispielsweise die Öffnungsebene 10 im Wesentlichen senkrecht zur Grundkörperebene 7 ausgebildet sein und das Führungsblech 11 entsprechend mit einem Winkel α gegenüber einer Vertikalen geringer ausgebildet sein. Es hat sich erfindungsgemäß gezeigt, dass auch in der späteren Nutzung mit der Dauerwechselbeanspruchung eines Querlenkers 1 sich diese Winkellage positiv auf den Spannungsverlauf auswirkt und die Dauerhaltbarkeit des erfindungsgemäßen Querlenkers 1 dadurch gesteigert ist.

### Bezugszeichen:

- 1 -: Querlenker
- 2 -: Grundkörperbereich
- 3 -: Lagerbereich
- 4 -: Lagerbereich
- 5 -: radseitiger Lagerbereich
- 6 -: Kugelgelenk
- 7 -: Grundkörperebene
- 8 -: Flansch
- 9 -: Aufnahmeöffnung
- 10 -: Öffnungsebene
- 11 -: Führungsblech
- 12 -: Kontur
- 13 -: Außenkontur zu L

- L -: Lagerhülse
- X -: Kraftfahrzeuglängsrichtung
- Y -: Kraftfahrzeugquerrichtung
- Z -: Kraftfahrzeugvertikalrichtung

## Patentansprüche

1. Querlenker (1) zur Anordnung an einer Achse eines Kraftfahrzeuges, wobei der Querlenker (1) einen Grundkörperbereich (2) und eine Lagerhülse (L) aufweist, der als einstückiges Blechbauteil aus einer Blechplatine hergestellt ist und der Grundkörperbereich (2) drei daran ausgebildete Lagerbereiche (3, 4, 5) aufweist, wobei der Grundkörperbereich (2) zwei Arme aufweist und eine Grundkörperebene (7) durch die Arme aufgespannt ist und ein Grundkörperbereich (2) eine einstückige und werkstoffeinheitliche Lageraufnahme in einem Lagerbereich (4) aufweist, die eine in einer Öffnungsebene (10) liegende Aufnahmeöffnung (9) aufweist, welche im Wesentlichen senkrecht zur Grundkörperebene liegt, wobei in die Aufnahmeöffnung (9) die Lagerhülse (L) eingesteckt und zumindest abschnittsweise verschweißt ist, wobei die Aufnahmeöffnung ein Loch ist, welches formschlüssig die Lagerhülse (L) vollumfänglich umgreift, wobei die Lageraufnahme gegenüber der Grundkörperebene (7) durch Abbiegen hergestellt ist und in dem Lagerbereich (4) ein Führungsblech (11) einstückig und werkstoffeinheitlich mit dem Grundkörperbereich (2) ausgebildet ist, wobei das Führungsblech (11) einen Aufnahmeabschnitt aufweist und der Aufnahmeabschnitt eine an die Außenkontur (13) der Lagerhülse (L) abschnittsweise angepasste Kontur (12) zur Aufnahme der Lagerhülse (L) aufweist, **dadurch gekennzeichnet, dass** die Kontur (12) ein Kreisabschnitt ist, welcher die Lagerhülse (L) an einer Außenmantelfläche in einem Winkelbereich zwischen 90 und weniger als 180 Grad umfasst.

2. Querlenker (1) nach Anspruch 1, **dadurch gekennzeichnet, dass** die Lagerhülse (L) mit der Aufnahmeöffnung (9) und mit dem Führungsblech (11) verschweißt ist.

3. Querlenker (1) nach einem der vorangehenden Ansprüche, **dadurch gekennzeichnet, dass** die Lagerhülse (L) mit der Aufnahmeöffnung (9) auf einer dem Führungsblech (11) abgewandten Seite verschweißt ist.

4. Querlenker (1) nach einem der vorangehenden Ansprüche, **dadurch gekennzeichnet, dass** die Lagerhülse (L) mit dem Führungsblech (11) auf einer der Aufnahmeöffnung (9) abgewandten Seite verschweißt ist.

5. Querlenker (1) nach einem der vorangehenden Ansprüche, **dadurch gekennzeichnet, dass** die Lagerhülse (L) in Kontakt an dem Führungsblech (11) anliegt.

6. Querlenker (1) nach einem der vorangehenden Ansprüche, **dadurch gekennzeichnet, dass** der Grundkörperbereich (2) durch Kaltumformen aus einer Stahlblechplatine hergestellt ist.

7. Querlenker (1) nach einem der vorangehenden Ansprüche 1 bis 5, **dadurch gekennzeichnet, dass** der Grundkörper aus einer Stahlblechplatine mittels Warmumformen und Presshärten hergestellt ist.

8. Querlenker (1) nach einem der vorangehenden Ansprüche, **dadurch gekennzeichnet, dass** die Öffnungsebene (10) zu der Grundkörperebene (7) in einem Winkel zwischen 80° und 100°, bevorzugt zwischen 85° und 95° und insbesondere rechtwinklig angeordnet ist.

9. Querlenker (1) nach einem der vorangehenden Ansprüche, **dadurch gekennzeichnet, dass** weitere Lagerbereiche vorhanden sind, insbesondere ein Kugelgelenk (6).

10. Querlenker (1) nach einem der vorangehenden Ansprüche, **dadurch gekennzeichnet, dass** der Grundkörperbereich (2) L-förmig ausgebildet ist.

11. Querlenker (1) nach einem der vorangehenden Ansprüche, **dadurch gekennzeichnet, dass** der Übergangbereich von Grundkörper zu der Aufnahmeöffnung und/oder zu dem Führungsblech (11) und/oder der Grundkörperbereich (2) Versteifungsgeometrien aufweist, insbesondere in Form von Versteifungssicken.

12. Querlenker (1) nach einem der vorangehenden Ansprüche, **dadurch gekennzeichnet, dass** das Führungsblech (11) und die Öffnungsebene (10) relativ zueinander in einem Winkel von größer 1, insbesondere größer 2 Grad und kleiner 15 Grad, bevorzugst kleiner 10 Grad zueinander angeordnet sind.

13. Querlenker (1) nach einem der vorangehenden Ansprüche, **dadurch gekennzeichnet, dass** mindestens ein Schließblech mit dem Grundkörperbereich (2) gekoppelt ist.

14. Querlenker (1) gemäß Anspruch 13, .......... **dadurch gekennzeichnet, dass** das Schließblech Versteifungsgeometrien und/oder Öffnungen aufweist.

## Claims

1. A transverse link (1) for arranging on an axle of a motor vehicle, wherein the transverse link (1) has a base body region (2) and a bearing sleeve (L), which is produced as a one-piece sheet metal component from a sheet metal blank, and the base body region (2) has three bearing portions (3, 4, 5) formed thereon,
wherein the base body region (2) has two arms and a base body plane (7) is spanned by the arms and a base body region (2) has a one-piece and material-uniform bearing receptacle in a bearing region (4), which has a receiving opening (9) lying in an opening plane (10) which is substantially perpendicular to the base body plane,
wherein the bearing sleeve (L) is inserted into the receiving opening (9) and welded at least in sections, wherein the receiving opening is a hole which completely surrounds the bearing sleeve (L) in a form-fitting manner,
wherein the bearing receptacle is produced by bending relative to the base body plane (7) and in the bearing area (4) a guide plate (11) is formed in one piece and of the same material as the base body area (2),
wherein the guide plate (11) has a receiving section and the receiving section has a contour (12), adapted in sections to the outer contour (13) of the bearing sleeve (L), for receiving the bearing sleeve (L), **characterized in that** the contour (12) is a circular section which surrounds the bearing sleeve (L) on an outer circumferential surface in an angular range between 90 and less than 180 degrees.

2. The transverse link (1) according to claim 1, **characterized in that** the bearing sleeve (L) is welded to the receiving opening (9) and to the guide plate (11).

3. The transverse link (1) according to any one of the preceding claims, **characterized in that** the bearing sleeve (L) is welded to the receiving opening (9) on a side facing away from the guide plate (11).

4. The transverse link (1) according to any one of the preceding claims, **characterized in that** the bearing sleeve (L) is welded to the guide plate (11) on a side facing away from the receiving opening (9).

5. The transverse link (1) according to any one of the preceding claims, **characterized in that** the bearing sleeve (L) bears in contact with the guide plate (11).

6. The transverse link (1) according to any one of the preceding claims, **characterized in that** the base body region (2) is produced by cold forming from a steel sheet blank.

7. The transverse link (1) according to any one of the preceding claims 1 to 5, **characterized in that** the base body is made from a steel sheet blank by means of hot forming and press hardening.

8. The transverse link (1) according to any one of the preceding claims, **characterized in that** the opening plane (10) is arranged at an angle between 80° and 100°, preferably between 85° and 95°, and in particular at right angles to the base body plane (7).

9. The transverse link (1) according to any one of the preceding claims, **characterized in that** further bearing areas are present, in particular a ball joint (6).

10. The transverse link (1) according to any one of the preceding claims, **characterized in that** the base body region (2) is L-shaped.

11. The transverse link (1) according to any one of the preceding claims, **characterized in that** the transition region from the base body to the receiving opening and/or to the guide plate (11) and/or the base body region (2) has stiffening geometries, in particular in the form of stiffening beads.

12. The transverse link (1) according to any one of the preceding claims, **characterized in that** the guide plate (11) and the opening plane (10) are arranged relative to one another at an angle of greater than 1, in particular greater than 2 degrees and less than 15 degrees, preferably less than 10 degrees.

13. The transverse link (1) according to any one of the preceding claims, **characterized in that** at least one locking plate is coupled to the base body region (2).

14. The transverse link (1) according to claim 13, **characterized in that** the locking plate has stiffening geometries and/or openings.

## Revendications

1. Bras oscillant transversal (1) destiné à être agencé sur un essieu d'un véhicule à moteur, dans lequel le bras oscillant transversal (1) présente une zone (2) de corps de base et une douille (L) de palier qui est fabriquée sous la forme d'un composant monobloc en tôle à partir d'une plaque en tôle, et la zone (2) de corps de base présente trois zones (3, 4, 5) de palier formées sur elle, dans lequel la zone (2) de corps de base présente deux bras et un plan (7) de corps de base est sous-tendu par les bras et une zone (2) de corps de base présente un logement de palier monobloc et avec homogénéité de matériau dans une zone (4) de palier qui présente une ouverture (9) de logement située dans un plan (10) d'ouverture, laquelle se situe sensiblement perpendiculairement au plan de corps de base, dans lequel la douille (L) de palier est insérée dans l'ouverture (9) de logement et soudée au moins par sections, dans lequel l'ouverture de logement est un trou, qui enserre entièrement la douille (L) de palier par coopération de formes, dans lequel le logement de palier est obtenu par pliage par rapport au plan (7) de corps de base et, dans la zone (4) de palier, une tôle de guidage (11) est réalisée en une seule pièce et avec homogénéité de matériau avec la zone (2) de corps de base, dans lequel la tôle de guidage (11) présente une section de réception et la section de réception présente un contour (12) adapté par sections au contour extérieur (13) de la douille (L) de palier pour recevoir la douille (L) de palier, **caractérisé en ce que** le contour (12) est une section circulaire, laquelle comprend la douille (L) de palier sur une surface d'enveloppe extérieure dans une plage angulaire comprise entre 90 et moins de 180 degrés.

2. Bras oscillant transversal (1) selon la revendication 1, **caractérisé en ce que** la douille (L) de palier est soudée avec l'ouverture (9) de logement et avec la tôle de guidage (11).

3. Bras oscillant transversal (1) selon l'une quelconque des revendications précédentes, **caractérisé en ce que** la douille (L) de palier est soudée avec l'ouverture (9) de logement sur un côté opposé à la tôle de guidage (11).

4. Bras oscillant transversal (1) selon l'une quelconque des revendications précédentes, **caractérisé en ce que** la douille (L) de palier est soudée avec la tôle de guidage (11) sur un côté opposé à l'ouverture (9) de logement.

5. Bras oscillant transversal (1) selon l'une quelconque des revendications précédentes, **caractérisé en ce que** la douille (L) de palier est en contact avec la tôle de guidage (11).

6. Bras oscillant transversal (1) selon l'une quelconque des revendications précédentes, **caractérisé en ce que** la zone (2) de corps de base est obtenue par formage à froid à partir d'une platine en tôle d'acier.

7. Bras oscillant transversal (1) selon l'une quelconque des revendications précédentes 1 à 5, **caractérisé en ce que** le corps de base est obtenu à partir d'une platine en tôle d'acier par formage à chaud et emboutissage à chaud.

8. Bras oscillant transversal (1) selon l'une quelconque des revendications précédentes, **caractérisé en ce que** le plan (10) d'ouverture est disposé par rapport au plan (7) de corps de base à un angle compris entre 80° et 100°, de préférence entre 85° et 95° et en particulier perpendiculairement.

9. Bras oscillant transversal (1) selon l'une quelconque des revendications précédentes, **caractérisé en ce que** d'autres zones de palier, en particulier une articulation à rotule (6), sont présentes.

10. Bras oscillant transversal (1) selon l'une quelconque des revendications précédentes, **caractérisé en ce que** la zone (2) de corps de base est réalisée en forme de L.

11. Bras oscillant transversal (1) selon l'une quelconque des revendications précédentes, **caractérisé en ce que** la zone de transition du corps de base à l'ouverture de réception et/ou à la tôle de guidage (11) et/ou la zone (2) de corps de base présente des géométries de renfort, en particulier sous forme de moulures de renfort.

12. Bras oscillant transversal (1) selon l'une quelconque des revendications précédentes, **caractérisé en ce que** la tôle de guidage (11) et le plan (10) d'ouverture sont disposés l'un par rapport à l'autre à un angle supérieur à 1, en particulier supérieur à 2 degrés et inférieur à 15 degrés, de préférence inférieur à 10 degrés l'un par rapport à l'autre.

13. Bras oscillant transversal (1) selon l'une quelconque des revendications précédentes, **caractérisé en ce qu'**au moins une têtière est couplée à la zone (2) de corps de base.

14. Bras oscillant transversal (1) selon la revendication 13, **caractérisé en ce que** la têtière présente des géométries de renfort et/ou des ouvertures.
